## Europäisches Patentamt
## European Patent Office
## Office européen des brevets

(19)

(11) Veröffentlichungsnummer: **0 003 593**
**B1**

(12) **EUROPÄISCHE PATENTSCHRIFT**

(45) Veröffentlichungstag der Patentschrift:
**15.07.81**

(51) Int. Cl.³: **B 01 D 25/12,** B 30 B 9/10

(21) Anmeldenummer: **79100349.4**

(22) Anmeldetag: **07.02.79**

(54) Verfahren und Vorrichtung zum Filtrieren von Schlamm od.dgl.Filtergut in einer Filterpresse.

(30) Priorität: **08.02.78 DE 2805204**

(43) Veröffentlichungstag der Anmeldung:
**22.08.79 Patentblatt 79/17**

(45) Bekanntmachung des Hinweises auf die Patenterteilung:
**15.07.81 Patentblatt 81/28**

(84) Benannte Vertragsstaaten:
**BE FR GB IT NL**

(56) Entgegenhaltungen:
**DE-A-1 461 452**
**DE-A-1 536 874**
**DE-A-1 805 893**
**DE-A-2 244 917**
**DE-A-2 530 550**
**FR-A-565 606**

(73) Patentinhaber: **Passavant-Werke Michelbacher Hütte,
D-6209 Aarbergen 7 (DE)**

(72) Erfinder: **Klesper, Hugo, Auf dem Kirchgarten,
D-6209 Aarbergen 2 (DE)**
Erfinder: **Busse, Oswald, Dr.-Ing., Schillerstrasse 8,
D-6209 Aarbergen 2 (DE)**

(74) Vertreter: **Glawe, Richard, Dr. et al, Postfach 37,
D-8000 München 26 (DE)**

ACTORUM AG.

Verfahren und Vorrichtung zum Filtrieren von Schlamm od. dgl. Filtergut in einer Filterpresse

Die Erfindung betrifft ein Verfahren zum chargenweisen Filtrieren von Schlamm od. dgl. Filtergut in einer Filterpresse gemäss dem Oberbegriff des Anspruchs 1.

Ein derartiges Verfahren ist aus DE-A 1 461 452 bekannt. Durch die Speicherung von Schlamm in einem mit der Filterpresse verbundenen Windkessel wird der Vorteil erreicht, dass das Füllen der Filterpresse zu Beginn jeder Charge sehr schnell durch Entnahme des unter Druck stehenden Schlamms aus dem Windkessel erfolgen kann, wobei zusätzlich auch die Pumpe Schlamm in die Filterpresse fördern kann. Nach dem schnellen anfänglichen Füllen, bei welchem natürlich der Druck im Windkessel abnimmt, wird dann durch weiteres Zuführen von Schlamm mittels der Pumpe die eigentliche Filtration durchgeführt, wobei die Pumpe eine ständige Druckerhöhung in der Filterpresse bewirkt, bis schliesslich ein Grenzdruck erreicht ist und die Filtrationsphase beendet wird.

Der durch den Füllvorgang teilweise entleerte Windkessel muss vor jedem nächsten Füllvorgang wieder durch Schlammzuführung aufgeladen werden. Bei dem bekannten Verfahren erfolgt dies während der eigentlichen Filtrationsphase dadurch, dass ein Teil des von der Pumpe in die Filterpresse geförderten Schlamms an einer von der Zuführungsstelle entfernten Stelle wieder entnommen und dem Windkessel zugeführt wird. Ein damit verbundener Vorteil besteht darin, dass während der Filtrationsphase eine kräftige Durchströmung der Filterpresse erhalten und dadurch einer Verstopfung der Durchflussöffnungen der Filterpresse vorgebeugt wird. Das bekannte Verfahren hat aber den Nachteil, dass während der Filtrationsphase nur ein Teil des von der Pumpe geförderten Schlamms für die Filtration genutzt wird, ein anderer Teil aber ungenutzt wieder abgeführt wird. Dies bedeutet, bei gegebener Förderleistung der Pumpe, eine Verlängerung der Filtrationsphase bzw. eine Reduzierung der jeweils filtrierten Schlammenge. Die Förderleistung der Pumpe wird nicht optimal ausgenutzt.

Im wesentlichen denselben Nachteil weisen auch andere bekannte, mit Windkessel arbeitende Verfahren auf, die allerdings nicht zur eingangs genannten Gattung gehören, da bei ihnen der Windkessel nicht zum Schnellfüllen der Filterpresse, sondern für den eigentlichen Filtrationsvorgang genutzt wird. Nach De-A 1 536 874 werden zwei Pumpen verwendet, nämlich eine Niederdruckpumpe für das anfängliche Füllen der Filterpresse und eine Hochdruckpumpe für das gleichzeitige Aufladen des Windkessels. Während der eigentlichen Filtration werden beide Pumpen abgeschaltet und die Filterpresse mit dem Schlamm aus dem Windkessel beaufschlagt. Bei dem Verfahren nach DE-A 2 530 550 bewirkt die Pumpe das Füllen der Filterpresse sowie die weitere Schlammzuführung während eines ersten Abschnitts der Filtrationsphase, wobei gleichzeitig Schlamm aus der Filterpresse wieder entnommen und im Windkessel gespeichert wird. Dieser gespeicherte Schlamm wird der Filterpresse aber nicht bei der nächsten Füllphase, sondern bereits während des zweiten Abschnitts der Filtrationsphase zugeführt, indem bei Erreichen eines Grenzdrucks die Pumpe abgeschaltet und die Filtration unter fallendem Druck mit dem aus dem Windkessel zuströmenden Schlamm fortgesetzt wird. Man erkennt, dass bei beiden Verfahren die Pumpen nur während eines relativ kleinen Teils der gesamten Filtrationscharge in Betrieb gehalten werden und somit ebenfalls nicht optimal genutzt werden.

Aufgabe der Erfindung ist es, ein Verfahren der eingangs genannten Art zu schaffen, bei dem die Förderleistung der Pumpe optimal genutzt und dadurch die Dauer jeder Filtrationscharge abgekürzt und/oder während jeder Charge mehr Schlamm filtriert werden kann.

Diese Aufgabe wird erfindungsgemäss durch die Merkmale des Anspruchs 1 gelöst. Die Erfindung beruht somit im wesentlichen auf der Massnahme, die Entleerungsphase der Filterpresse, während der bei allen bekannten Verfahren die Pumpen abgeschaltet werden, zum Füllen des Windkessels heranzuziehen, d.h. die Pumpe auch während dieser Phase auszunutzen. Während der Filtrationsphase kann dann die Pumpe ausschliesslich zur Beschickung der Filterpresse arbeiten, so dass die Filtrierleistung erhöht bzw. die erforderliche Filtrationszeit abgekürzt wird. Während der Entleerungsphase arbeitet die Pumpe ebenfalls ausschliesslich für die Beschickung des Windkessels, so dass auch dieser Vorgang beschleunigt wird und auf jeden Fall innerhalb der für das Entleeren und gegebenenfalls Reinigen der Filterpresse ohnehin benötigten Zeit abgeschlossen werden kann. Von besonderem Vorteil ist es, dass man bei dem erfindungsgemässen Verfahren die Pumpe ständig laufen lassen und die verschiedenen Phasen nur durch Öffnen und Schliessen von Ventilen steuern kann.

Weiter bevorzugte Merkmale des erfindungsgemässen Verfahrens sowie einer Vorrichtung zu seiner Durchführung sind in den Unteransprüchen angegeben.

Eine Ausführungsform der Erfindung wird anhand der Zeichnungen näher erläutert.

Fig. 1 zeigt eine schematische Darstellung der Filterpresse mit Pumpe, Windkessel und Verbindungsleitungen.

Fig. 2 zeigt ein zeitliches Schema der Betriebszustände während der verschiedenen Phasen.

Fig. 3 zeigt graphisch den zeitlichen Verlauf des Drucks und der Filtratmenge bei dem erfindungsgemässen Verfahren im Vergleich zu dem bekannten Verfahren.

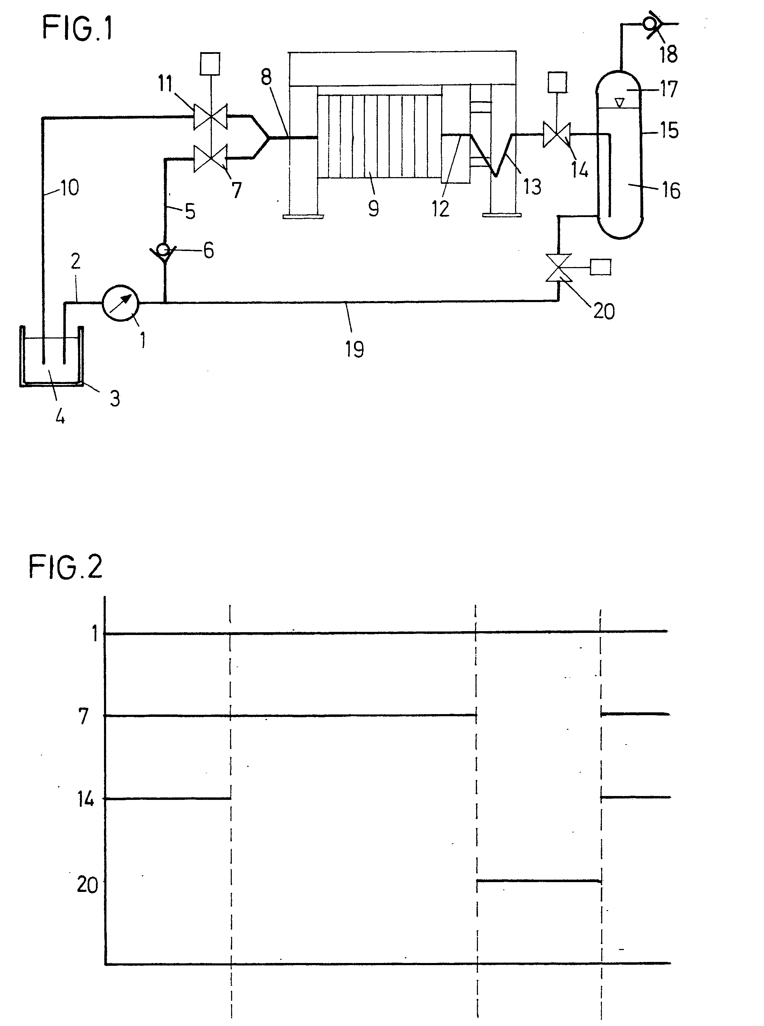

Gemäss Fig. 1 ist eine Pumpe 1 über eine Schlammzuführleitung 2 an einen Sammel- oder Vorratsbehälter 3 mit Schlamm 4 angeschlossen und fördert den Schlamm 4 über eine Leitung 5 mit Rückschlagventil 6 und Absperrventil 7 zur Eintrittsöffnung 8 einer Filterpresse 9. Für das Entleeren der Filterpresse führt eine Leitung 10 mit Absperrventil 11 zum Schlammbehälter 3 zurück. An der der Eintrittsstelle 8 gegenüberliegenden Seite der Filterpresse 9 ist eine Öffnung 12 über eine teilweise flexible Leitung 13 und ein Absperrventil 14 mit einem Windkessel 15 verbunden. Im Windkessel 15 befindlicher Schlamm 16 steht unter dem Druck eines Luftpolsters 17, dessen Entweichen durch ein Rückschlagventil 18 verhindert wird. Die Druckseite der Pumpe 1 ist ausserdem über eine direkte Verbindungsleitung 19 mit Absperrventil 20 ebenfalls mit dem Windkessel 15 verbunden.

Die Vorrichtung kann in der folgenden Weise betrieben werden, die in Fig. 2 veranschaulicht ist. In Fig. 2 zeigen die durchgezogenen horizontalen Linien an, wann die Pumpe eingeschaltet und die verschiedenen Ventile geöffnet sind. Eine Unterbrechung der horizontalen Linie zeigt den geschlossenen Zustand eines Ventils an.

Es wird davon ausgegangen, dass zu Beginn der Filtrationscharge im Windkessel 15 eine ausreichende Menge an Schlamm 16 unter einem ausreichend hohen Druck gespeichert ist. Für das Füllen werden die Ventile 7 und 14 geöffnet, während das Ventil 20 geschlossen ist. Der unter Druck in dem Windkessel 15 gespeicherte Schlamm strömt unter Druckminderung und sich allmählich verringernder Geschwindigkeit durch die Öffnung 12 in die Kammern der Filterpresse 9. Gleichzeitig fördert die Pumpe 1 von der Eintrittsseite 8 her ebenfalls Schlamm in die Filterpresse 9, so dass diese von beiden Seiten her schnell gefüllt wird. Diese Füllphase ist beendet, sobald der steigende Druck in der Filterpresse 9 und der fallende Druck im Windkessel 15 den gleichen Wert erreicht haben und die Schlammentnahme aus dem Windkessel 15 aufhört.

Es beginnt dann die Filtrationsphase, während der auch das Ventil 14 geschlossen ist. Der weiterhin von der Pumpe 1 an der Eintrittsseite 8 in die Filterpresse 9 geförderte Schlamm verbleibt vollständig in der Filterpresse 9 und wird filtriert, wobei der Druck in der Filterpresse 9 weiter ansteigt. Diese Filtrationsphase ist beendet, wenn der Druck in der Filterpresse 9 einen oberen Grenzwert erreicht hat, der bei üblichen Filterpressen in der Grössenordnung von 15 bar liegen kann.

An die Filtrationsphase schliesst sich dann die Phase der Entleerung an. Hierfür wird auch das Ventil 7 geschlossen (das Ventil 14 bleibt geschlossen), während das Ventil 20 und gegebenenfalls das Ventil 11 geöffnet werden. Die Filterpresse 9 wird rasch drucklos und kann dann geöffnet werden, um die Filterkuchen zwischen den einzelnen Filterplatten auszuwerfen und gegebenenfalls die Filtertücher zu reinigen. Während dieser Zeit läuft aber die Pumpe 1 weiter und fördert Schlamm über die Leitung 19 in den Windkessel 15, so dass dieser wieder aufgeladen wird und für den nächsten Füllvorgang eine ausreichende Schlammenge unter ausreichendem Druck bereithält.

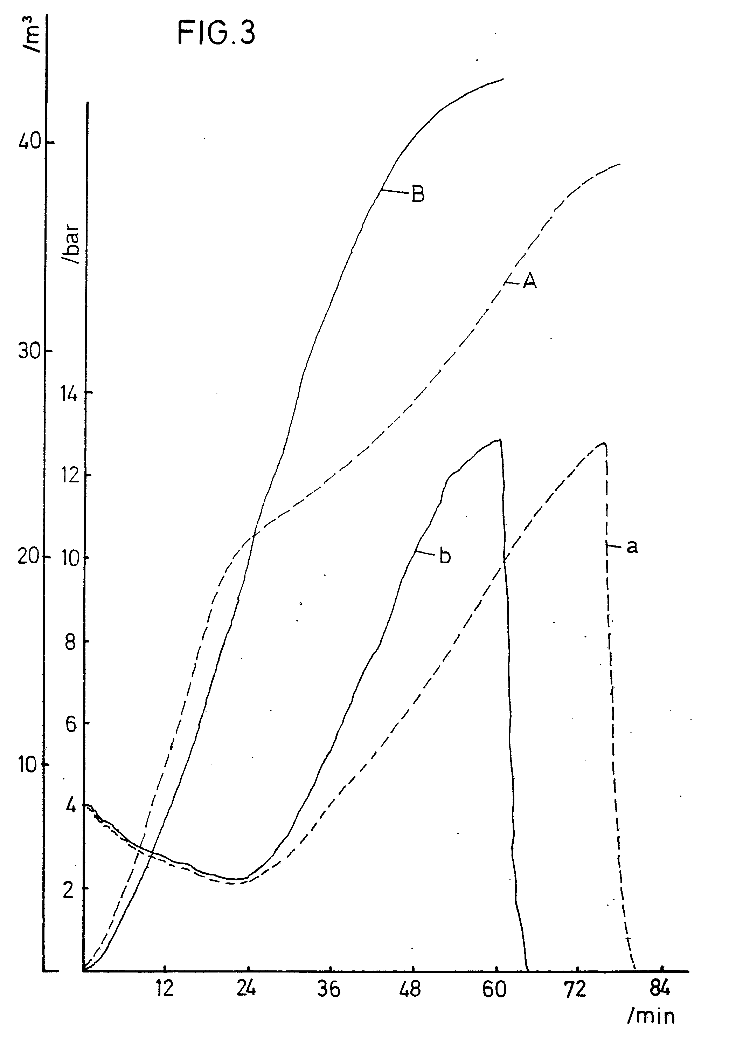

In Fig. 3 ist über der Filtrationszeit der Verlauf des Drucks in der Filterpresse (Kurven a, b) sowie die Menge des anfallenden Filtrats (Kurven A, B) aufgetragen, wobei sich die ausgezogenen Kurven b, B auf das erfindungsgemässe Verfahren und die gestrichelten Kurven a, A auf das bekannte Verfahren gemäss DE-PS 1 461 452 beziehen. Betrachtet man zunächst den Druckverlauf (Kurven a, b), so zeigt sich, dass dieser beim bekannten und beim erfindungsgemässen Verfahren bis zum Ende des Füllvorgangs (bei etwa 24 Minuten) in etwa übereinstimmt. Danach steigt jedoch bei dem bekannten Verfahren (Kurve a) der Druck wesentlich langsamer an, da ja ein Teil des Schlamms wieder abgeführt und vom Windkessel aufgenommen wird. Nach dem erfindungsgemässen Verfahren (Kurve b), bei dem im Tiefstpunkt der Druckkurve die Verbindung zwischen der Filterpresse 9 und dem Windkessel 15 gesperrt wird, steigt der Druck wesentlich schneller an. Der Höchstdruck von (bei diesem Ausführungsbeispiel) 13 bar wird nach dem erfindungsgemässen Verfahren bereits bei 60 Minuten, bei dem bekannten Verfahren dagegen erst ca. 15 Minuten später erreicht. Dies entspricht einer Verkürzung der Filtrationscharge um ca. 25%.

Trotz dieser Verkürzung der Filtrationszeit kann die insgesamt anfallende Filtratmenge und damit die insgesamt entwässerte Schlammenge erheblich gesteigert werden, wie ein Vergleich der Kurven A und B zeigt. Nach dem bekannten Verfahren haben nach ca. 75 Minuten erst 38,5 m³ Filtrat die Filterpresse verlassen. Nach dem erfindungsgemässen Verfahren beträgt die Filtratmenge aber nach 60 Minuten schon 43 m³, zu diesem Zeitpunkt sind bei dem bekannten Verfahren erst 33 m³ angefalllen. Dies entspricht einer Steigerung von fast 30%.

Die Erfindung ist nicht auf die Einzelheiten des beschriebenen Ausführungsbeispiels beschränkt. So ist es z.B. möglich, den Windkessel 15 durch Verbindungsleitungen mit Absperrventilen mit beiden Seiten der Filterpresse 9, also der Öffnung 12 und der Eintrittsöffnung 8, zu verbinden, so dass das Schnellfüllen aus dem Windkessel 15 von beiden Seiten der Filterpresse her erfolgen kann. Auch ist es möglich, das Verfahren dann so abzuwandeln, dass während des Schnellfüllens das Ventil 7 geschlossen und das Ventil 20 geöffnet wird, so dass das Schnellfüllen der Filterpresse 9 ausschliesslich aus dem Windkessel 15 erfolgt und die Pumpe 1 während dieser Zeit Schlamm über die Leitung 19 in den Windkessel 15 pumpt.

Die Betätigung der Ventile 7, 14, 20 erfolgt vorzugsweise durch eine (nicht dargestellte) zentrale Steuereinrichtung mit Druckfühlern, wobei der Übergang von der Schnellfüllphase zur Filtrationsphase (d.h. Schliessen des Ventils 14) durch einen auf ein Druckminimum in der Filterpresse 9 ansprechenden Druckfühler gesteuert werden kann, während das Ende der Filtrationsphase, d.h. das Schliessen des Ventils 7 und Öffnen des Ventils 20, durch einen auf einen oberen Grenzdruck in der Filterpresse 9 ansprechenden Druckfühler gesteuert wird.

## Patentansprüche

1. Verfahren zum chargenweisen Filtrieren von Schlamm od. dgl. Filtergut in einer Filterpresse, an die eine Pumpe zum Zuführen des Schlamms und Erzeugen des Filtrierdruckes und ein Windkessel zum zeitweisen Speichern von Schlamm unter Druck angeschlossen sind, wobei jede Filtrationscharge aus einer Füllphase, während der die Filterpresse mit Schlamm, der mindestens teilweise aus dem Windkessel entnommen wird, gefüllt wird, einer Filtrierphase, während der die Pumpe Schlamm in die Filterpresse zum Erzeugen des Filtrierdruckes fördert, und einer Entleerungsphase, in der die Filterpresse bei gesperrter Verbindung zum Windkessel geöffnet und der Filterkuchen abgeworfen wird, besteht und der Windkessel während eines Teils jeder Filtrationscharge mit von der Pumpe gefördertem Schlamm beschickt wird, dadurch gekennzeichnet, dass der Windkessel während der Entleerungsphase mit Schlamm von der Pumpe beschickt wird.

2. Verfahren nach Anspruch 1, dadurch gekennzeichnet, dass die Pumpe ständig läuft und abwechselnd mindestens während der Filtrationsphase mit der Filterpresse und mindestens während der Entleerungsphase mit dem Windkessel verbunden ist.

3. Verfahren nach Anspruch 2, dadurch gekennzeichnet, dass die Pumpe auch während der Füllphase mit der Filterpresse verbunden ist.

4. Verfahren nach einem der Ansprüche 1 bis 3, dadurch gekennzeichnet, dass die Verbindung des Windkessels zur Filterpresse während der gesamten Filtrationsphase oder mindestens während ihres letzten Abschnitts gesperrt ist.

5. Vorrichtung zur Durchführung des Verfahrens nach einem der Ansprüche 1 bis 4, mit mindestens einer Filterpresse (9), einer saugseitig an eine Schlammzuführungsleitung (2) angeschlossenen Pumpe (1), die druckseitig über ein erstes Absperrventil (7) an der Filterpresse (9) angeschlossen ist, und einem Windkessel (15), der über ein zweites Absperrventil (14) an die Filterpresse (9) angeschlossen ist, dadurch gekennzeichnet, dass die Pumpe (1) druckseitig zusätzlich über eine Verbindungsleitung (19) mit einem dritten Absperrventil (20) an den Windkessel (15) angeschlossen ist.

6. Vorrichtung nach Anspruch 5, gekennzeichnet durch eine das erste und dritte Absperrventil (7, 20) wechselweise betätigende Steuereinrichtung.

## Claims

1. A process for filtering sludge or similar matter by successive charges in a filter press to which are connected a pump for feeding the sludge and creating the filtering pressure and an air vessel for temporarily storing of sludge under pressure, each of the filtration charges comprising a filling phase during which the filter press is filled with sludge which is taken at least partly from the air vessel, a filtering phase during which the pump feeds sludge into the filter press to create the filtering pressure, and an emptying phase in which the filter press is opened with the connection to the air vessel being closed and the filter cake is discharged, and wherein the air vessel is loaded during a part of each filtration charge with sludge conveyed by the pump, characterized by the fact that the air vessel is loaded with sludge from the pump during said emptying phase.

2. A process as claimed in claim 1, characterized in that the pump operates continually and is connected alternately at least during said filtration phase with the filter press and at least during said emptying phase with the air vessel.

3. A process as claimed in claim 2 characterized in that the pump is connected to the filter press also during said loading phase.

4. A process as claimed in one of claims 1 to 3 characterized in said the connection of the air vessel to the filter press is closed during the entire filtration phase or at least during its final part.

5. An apparatus for carrying out the method as claimed in one of claims 1 to 4, comprising at least on filter press (9), a pump (1) having its suction side connected to a sludge supply conduit (2) and having its pressure side connected to the filter press (9) via a first shut-off valve (7), and an air vessel (17) connected to the filter press (9) via a second shut-off valve (14), characterized in that the pump (1) has its pressure side additionally connected to said air vessel (15) via a connecting conduit (19) having a third shut-off valve (20).

6. An apparatus as claimed in claim 5, characterized by control means adapted to alternately operate said first and third shut-off valves (7,20).

## Revendictions

1. Procédé pour la filtration par charges successives de boues ou de matières à filtrer similaires dans un filtre-presse, auquel sont raccordées une pompe pour l'adduction de boue et la création de la pression de filtration et une cloche à vent pour l'alimentation temporaire en boue sous pression, chaque charge de filtration comprenant une phase de remplissage, pendant laquelle le filtre-presse est rempli de boue qui est prélevée au moins en partie dans la cloche à vent, une phase de filtration, pendant laquelle la pompe refoule de la boue dans le filtre-presse pour la création de la pression de filtration, et une phase de vidage, pendant laquelle le filtre-presse est ouvert et le tourteau de filtration est expulsé tandis que la communication avec la cloche à vent est interrompue, et la cloche à vent étant chargée de boue refoulée par la pompe pendant une partie de chaque charge de filtration, caractérisé en ce que la cloche à vent est chargée de boue par la pompe pendant la phase de vidage.

2. Procédé selon la revendication 1, caractérisé en ce que la pompe marche constamment et est raccordée alternativement au filtre-presse, au moins pendant la phase de filtration, et à la cloche à vent, au moins pendant la phase de vidage.

3. Procédé selon la revendication 2, caractérisé en ce que la pompe est également raccordée au filtre-presse pendant la phase de remplissage.

4. Procédé selon l'une quelconque des revendications 1 à 3, caractérisé en ce que la communication entre la cloche à vent et le filtre-presse est interrompue pendant toute la phase de filtration ou au moins pendant la dernière période de celle-ci.

5. Dispositif pour l'exécution du procédé selon l'une quelconque des revendications 1 à 4, comportant au moins un filtre-presse (9), une pompe (1) raccordée du côté aspiration à une conduite d'adduction de boue (2), pompe qui est en communication du côté refoulement avec le filtre-presse (9) avec interposition d'une soupape d'arrêt (7), et une cloche à vent (15) qui est raccordée au filtre-presse (9) avec interposition d'une seconde soupape d'arrêt (14), caractérisé en ce que la pompe (1) est raccordée en plus à la cloche à vent (15) par une conduite de jonction (19) équipée d'une troisième soupape d'arrêt (20).

6. Dispositif selon la revendiction 5, caractérisé par un dispositif de commande automatique qui manœuvre alternativement la première et la troisième soupapes d'arrêt (7,20).

# FIG.1

# FIG.2

FIG.3